# EUROPEAN PATENT SPECIFICATION

(11) **EP 0 500 939 B1**
(45) Date of publication and mention of the grant of the patent: **06.11.1996**
(21) Application number: 91910378.8
(22) Date of filing: 30.05.1991
(51) Int. Cl.: G01D 15/18, B41J 2/21

(54) **METHOD AND PRINTING HEAD FOR MULTICOLOUR INK-JET PRINTING AND METHOD OF MAKING SAID HEAD**
VERFAHREN SOWIE DRUCKKOPF FÜR MEHRFARBIGEN TINTENSTRAHLDRUCK UND HERSTELLUNGSVERFAHREN FÜR DIESEN DRUCKKOPF
PROCEDE ET TETE D'IMPRESSION POUR IMPRESSION PAR JET D'ENCRE MULTICOLORE ET PROCEDE DE FABRICATION DE LADITE TETE

(30) Priority: 12.06.1990 SU 4829820
(43) Date of publication of application: 02.09.1992
(73) Proprietor: SAMSUNG ELECTRONICS CO., LTD., Chung-Ku Seoul (KR)
(72) Inventor: Eremin, Jury Grigorievich, Moscow (SU); Maximovsky, Sergei Nicolaevich, Moscow (SU); Radutsky, Grigory Avramovich, Moscow (SU)
(74) Representative: Luckhurst, Anthony Henry William
(86) International application number: PCT/SU91/00107
(87) International publication number: WO 91/19956

(56) References cited:
- EP-A- 0 308 272
- EP-A- 0 426 854
- DE-A- 3 622 535
- SU-A- 1 635 896
- US-A- 3 975 741
- US-A- 4 280 130
- US-A- 4 347 522
- US-A- 4 354 197
- US-A- 4 380 771
- US-A- 4 511 907
- US-A- 4 516 139
- NAGORNY V.S. "Elektrokaplestruinye registrirujuschie ustroistva" 1988, "Mashinostroenie" (Leningrad), pages 243-250.

## Description

The invention relates to a method of multicolour jet printing, a jet print head and associated modes of manufacture.

Among the recognized methods of multicolour jet printing, the optimal quality is secured by that which positions an information carrier opposite a group array of ink jet orifices arranged according to the number of print colours, and forms image (record) elements on the information carrier in the manner of subtraction of colours by propelling ink onto the information carrier through group orifices selected for printing, into the zone of every image element (V.S. Nagorni, "Electrokaplestruinije registrirujuschie ustroistva", 1988, Mashinostrojenije, Leningrad, pp. 243-250).

This method is inadequate as the quality of the image obtained largely depends on the exactness of respective displacement of the information carrier and ink orifices. Besides, the quality of the image is affected by such external factors as environmental temperature fluctuations, and deformation of the carrying frame of the print device, on which the orifices and gears of displacement of the information carrier and/or of the orifices etc. are housed. Due to these factors, the respective displacement of the orifices and the information carrier can be disrupted. Furthermore, the quality of the image depends on the precision of manufacture, on precision of movements of the print device elements, and dimensional changes in gears due to wear and tear.

Various different devices are used to perform such a method of multicolour jet printing. Specific examples are described in US-A-4511907 and US-A-4516139. In these systems, each head is meant for a particular print colour, and it commands parallel rows of orifices of the same type. The printing quality (exactness of colour adjustment) achieved by the heads depends on precision of manufacture, accurateness of movement and/or displacement synchronisation of the orifices and/or of the information carrier. Consequently, the structure of the disclosed print device is very complex, and causes unstable quality of multicolour printing due to such external factors as voltage oscillation, temperature change and impact of deformations, vibration etc.

A jet print head comprising a multilaminate structure, and underlay, criss-crossing parallel rows of orifices made by capillary openings (tubes) directed perpendicular to the plane of the underlay, each opening with an electrode that is common for the given row of orifices, and with an individual electrode of opposite polarity positioned on the same plane as of the common electrode is known from late-published EP-A-0426 854. A system for supplying electric current to the electrodes is located in separate layers of the multilaminate structure. An ink supply system containing feeder channels through which communication is established with inlet orifices is also located in these layers.

This print head is inadequate because it does not provide for the simultaneous supply of ink to the adjacent orifices of the head.

The above jet print head is formed by creating the multilaminate structure formed of dielectric layers with the common and individual electrodes on the underlay. At this stage the current activation system for the common and individual electrodes is formed. The criss-crossing, parallel rows of orifices are provided next, in the form of capillary openings that are directed perpendicular to the plane of the underlay, and cross the underlay at points positioned between the common and individual electrodes. Finally, feeder channels, through which communication is established with inlet orifices, are made.

The above method is inadequate because it gives no chance to make a head capable of rendering simultaneous supply of ink to the adjacent orifices.

DE 36 22 535 Al discloses a printing head which contains nozzles arranged in a series of columns. Each column is connected to ink reservoirs via a respective line. The nozzles of each column are therefore supplied with ink of a particular colour. A particular colour is applied to a particular point by sideways movement of the head until the column supplied with the appropriate colour faces the point and subsequent dispensation of the ink from an appropriate hole in the column. This head does not overcome the problems discussed in relation to US-A-4 511 907 and US-A-4 516 139 above.

US-A-380 771 discloses an ink jet head comprising a plurality of orifices for each colour ink; and common liquid chambers, each chamber supplying the orifices for dispensing a particular colour of ink. The orifices are arranged in a row.

The invention sets out to provide a method and head for multicolour jet printing by colour subtraction, and also a mode of making the jet print head, that provide a higher quality and quantity of multicolour printing.

Accordingly, the invention provides a method of multicolour jet printing as set out in claim 1.

This method enables exact adjustment of colours in every element of the image throughout the whole of the image space, since the orifices supplying different coloured fluids (ink) to every group and the information carrier are stationary in relation to each other, during printing. Furthermore, this facilitates higher productivity owing to the simultaneous application of ink throughout the whole of the image space.

The invention also provides a jet print head as set out in claim 2.

Such a jet print head enables a simultaneous supply of ink of each colour to the respective orifices in each group of say, four orifices for printing by subtraction of colours.

An exactness of colours adjustment is achieved, since the points of colour delivery are fixed in relation to each other, and also to the information carrier, and do not depend on external factors.

The invention also provides a method of manufacturing a print head according to claim 3.

This method provides a jet print head construction for multicolour printing with a plurality of orifice groups that contain orifices bearing different colours in every group, and are spaced at an interval necessary for adjustment of colours by subtraction. The method allows the possibility of having capillary channels at a very small interval (200 micra) by the use of simple technical operations in punching through the openings.

This method may be profitably used if the openings serve as supporting elements in centring the equipment to procure the channels.

Embodiments of the invention will now be described by way of example and with reference to the accompanying drawings, in which:-
Fig. 1 illustrates a method of multicolour jet printing in accordance with the invention.
Fig. 2 - is a general view of a jet print head in accordance with the invention
Fig. 3 - is a cross-section along III-III of Fig. 2;
Fig. 4 - is a cross-section along IV-IV of Fig. 2;
Fig. 5 - is a cross-section along V-V of Fig. 3;
Fig. 6 - is a cross-section along VI-VI of Fig. 3;
Fig. 7 - is a cross-section along VII-VII of Fig. 3;
Fig. 8 - is a cross-section along VIII-VIII of Fig. 3;
Fig. 9 - is a cross-section along IX-IX of Fig. 4;
Fig. 10 - is a cross-section along X-X of Fig. 4;
Figures 11-15 show the stages of manufacturing the jet print head in accordance with the invention.

An embodiment of a method of multicolour jet printing in accordance with the invention is performed as follows.

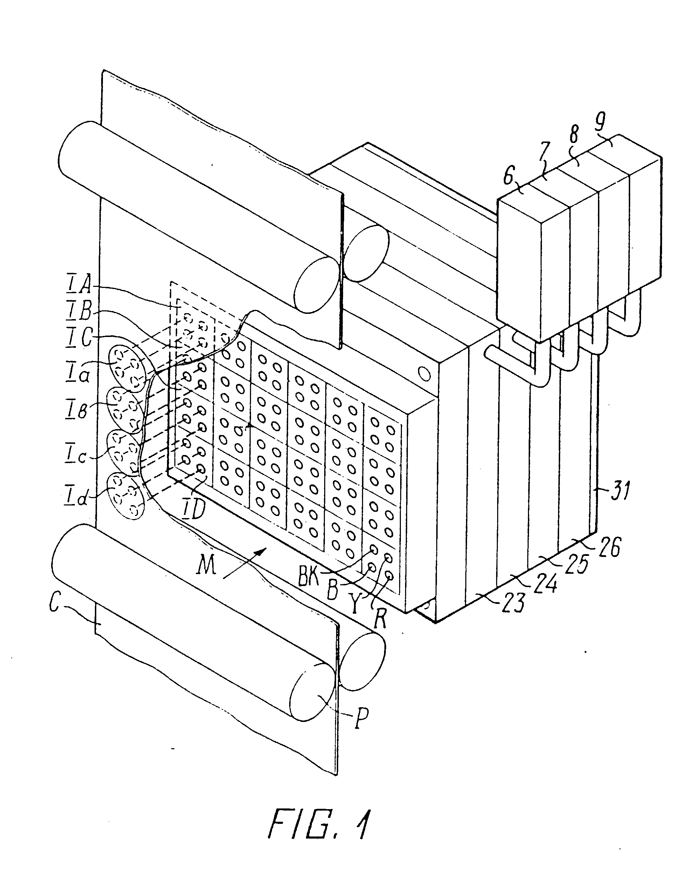

An information carrier C (e.g. a sheet of paper) is placed opposite the orifices BK, Y, R, B corresponding to black, yellow, red and blue ink colours that are normally used for printing by subtraction of colours (Fig. 1). The orifices BK, Y, R, B are positioned on a matrix M. The information carrier C and matrix M are stationary in relation to each other. This can be achieved with the help of a frame that is rigidly attached to the matrix M and equipped with clamps (mechanical and vacuum) to anchor the information carrier (not shown in the picture). Obviously, as is known to specialists, such a printing device can accommodate a paper feeding unit P. The unit P is also capable of performing the job of making the information carrier stationary.

Jets of black, yellow, red and blue ink are propelled to zones 1a, 1b, 1c and 1d or the information carrier C through orifice groups IA, IB, IC and ID. The number of orifices in each group is equal to the number of print colours (four in our instance). Orifice groups IA, IB, IC and ID are arranged in criss-crossing parallel rows and columns on matrix M.

Delivery of all coloured fluids (ink) is carried out simultaneously through all orifices selected. For example, the ink from orifices BK, Y, R and B in each of orifice groups IA, IB, IC and ID, is projected into zones Ia, Ib, Ic and Id of the information carrier C respectively. It will be clear that ink may not flow through some orifices in every group as is noticeable in the course of multicolour printing by subtraction of colours.

It will be clear from the above explanation of the method of multicolour jet printing that the points of all image elements on the information carrier C are simultaneously tinted with the colours needed, throughout the whole space of the image, at a fixed position of the information carrier in relation to that of matrix M. By this technique, exact adjustment of colours is achieved, unaffected by extraneous factors. The exact adjustment of colours is achieved by a combination of the immobility of the carrier and the simultaneous printing of all dots of the image elements.

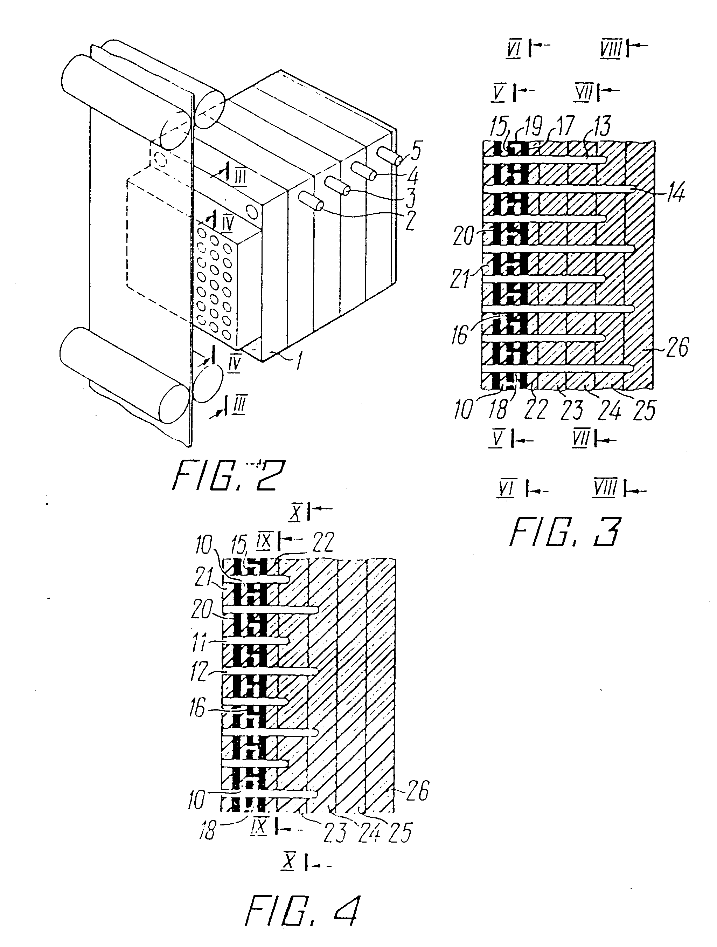

To perform the described method of multicolour jet printing, it is necessary to maintain a simultaneous supply of ink through orifices selected for printing. This is done with the help of the jet print head I shown in Figure 2.

The illustrated jet print head I is equipped with branch pipes 2, 3, 4 and 5 of the ink supply system which are respectively connected to storage chambers 6, 7, 8 and 9 that respectively contain black, yellow, red and blue ink.

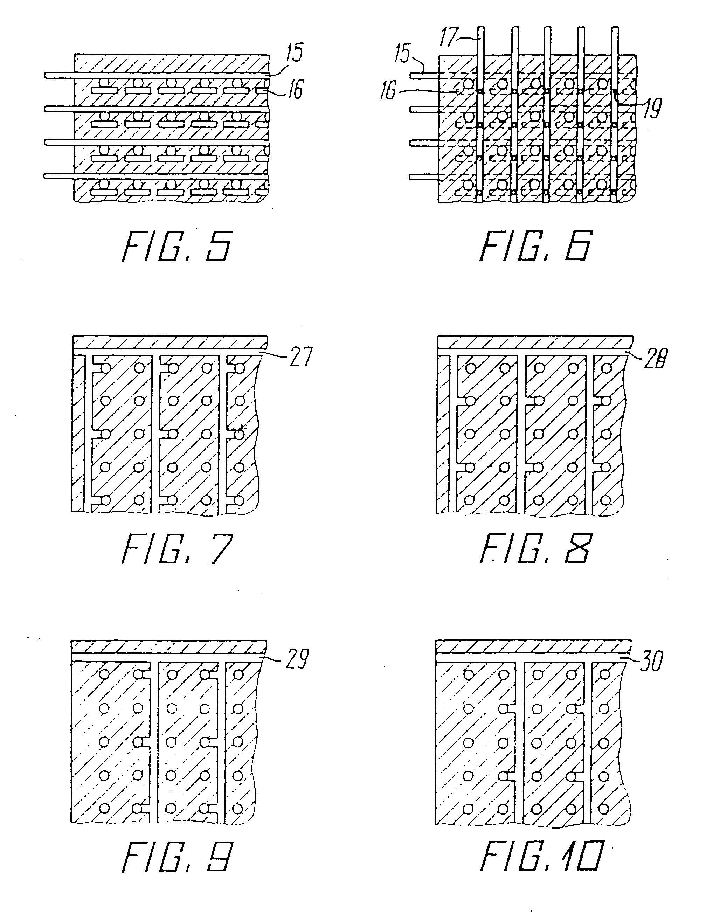

As shown in Figures 3 and 4, the jet print head I is in the form of a multilaminate structure comprising an underlay 10, and criss-crossing parallel rows of orifices BK, Y, R and B defined by capillary openings 11, 12, 13 and 14 (Fig. 4) directed perpendicular to the plane of the underlay 10.

Each orifice is associated with an electrode 15 that is common for the given row of orifices, and an individual electrode 16 of opposite polarity (Fig. 3-6) located on the same plane as the common electrode 15. Common electrodes 15 are modelled on bars and are situated inside the underlay 10. Each orifice in these rows also has an individual electrode 16. The said electrodes 16 are situated in the same plane as the electrodes 15 that is directed perpendicular to the axes of the capillary openings 11-14, but on the opposite side of the respective openings.

Thus, all of the electrodes are located in the underlay, in a plane directed perpendicular to axis of orifices and thereby constitute a single layer of multilaminate structure. Electrodes belonging to different rows are electrically isolated in relation to each other. Individual electrodes 16 are connected to power supply bars 17 that are positioned on a plane parallel to that in which the electrodes 16 are disposed, and are separated from these electrodes by the dielectric material. The bars are aligned perpendicular to electrodes 15 and each is connected to a single electrode in each of the rows of orifices.

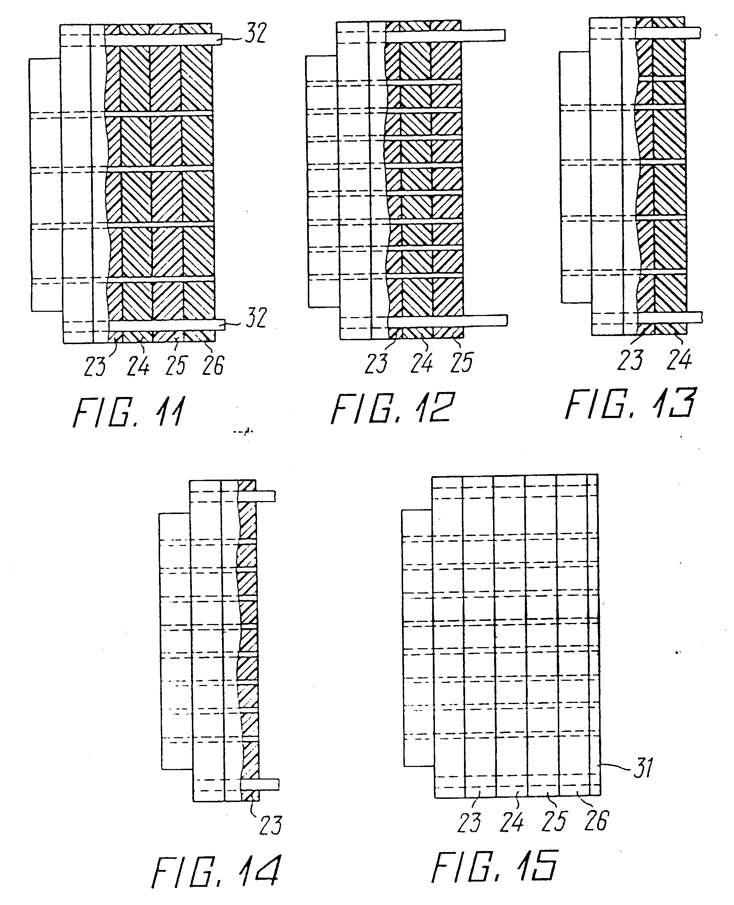

Therefore, as shown in Fig. 5 and 6, electrodes 15 and electrode bars 16 are positioned on criss-crossing lines and are separated by the layer of dielectric 18.

Crosspieces 19, for bridging individual electrodes 16 and bars 17, pass through dielectric layer 18 parallel to the axes of the orifices 11-14.

On the outside of the underlay 10 lies a magnetic layer 20, which is protected by a coating 21. On the opposite side, the multilaminate structure is closed by an electrically insulating layer 22.

As shown in Figures 3, 4 and 6-10, the capillary openings 11-14 of the orifices BK, Y, R and B terminate in the respective layers 23-26 of the underlay 10. Each layer 23-26 contains a respective system of feeder channels 27-30 that are formed as grooves on the surface of the respective underlay layer. Those channels communicate with respective openings 11-14 and branch pipes 3-6, which are coupled with ink storages 6-9 (Fig. I). This structure enables simultaneous supply of ink to all orifices by a compact arrangement Layer 31 is needed for plugging openings 14.

The above jet head is manufactured as follows.

On the one side of the underlay 10, which is made of dielectric material, continuous strips of electrically conductive material are applied by any conventional procedure. These strips serve to form the electrodes 15 and intermittent strips 16 that constitute individual electrodes. The distance between the continuous and intermittent strips is somewhat smaller than the diameter of the capillary openings 11-14.

The structural layer which is thus obtained is then covered by the electrically insulating layer 18, on which the electrically conductive layer 17 is applied as a series of continuous strips, which are directed perpendicular to those strips that constitute electrodes 15.

After this is done, the electrically conductive crosspieces 19 are formed between the electrodes 16 and the strips 17. The structure obtained is covered by the layer 22 of electrically insulating material. On the opposite side of the underlay 10, the layer 20 of magnetic material is formed, and this is covered with the protective film layer 21.

Next, the whole package is assembled from the layers with electrodes 15 and 16, the magnetic layer 20 and electrically conductive bars, and also all the underlay layers, excepting layer 31. To perform assembly (by adjustment of layers) any conventional devices can be used. For example, centring sprigs 32 (Fig. 11) and counter openings (unmarked) may be used. Grooves and counter projections provided on the layers, special conductors, and electronic and optical systems etc. can also be employed.

After assembly, the first series of capillaries 14 are formed, with one in each group IA, IB, IC and ID of orifices (Fig. 3, 11). These can be made, for example, by laser or by any other method whilst securing a tube diameter of about 30 µm arranged with a 200-300 µm interval between the openings. Next, the layer 26 of the underlay is removed, and the next series of less deep capillaries 13 (Fig. 13) are formed with one in each group IA, IB, IC and ID of orifices, and so on.

After formation of the capillaries, layers 23-26 are re-assembled in reverse order on the very same springs 32 with automatic plugging of capillaries 11-13 by every subsequent additional layer of the underlay. Layer 31 of the underlay is installed to close the deepest capillaries.

Feeder channels 27-30 (Fig. 6-10) can be created in layers 25-26 of the underlay 10 beforehand, so that the practical manufacture of the whole unit of multilaminate structure can be carried out, with elements ready, in a single work zone.

On the other hand, while forming channels 27-30 after the capillaries 11-14 are made, the said capillaries can be used as supporting elements to allow exact placement of the channels. These options depend on the availability of specific technology and equipment.

After the whole multilaminate structure is assembled, its components are fastened (using glue, filler, clamps etc.), and the feeder channels 27, 28 29 and 30 (Fig. 6-10) are joined to the respective branch pipes 2-5 (Fig. 2), as shown in Fig. 2-10, to maintain connections with ink storages 6-9.

The described jet print head operates as follows.

An information carrier C (Fig. 1-2) is positioned in a position stationary in relation to the print head I. When an electrical signal pulse is applied to one of the bars 15 and one of the bars 17 (Fig. 5-6) through conductive ink, the circuit of the electrodes of the respective capillary tube 11-14 is closed. A current flows in this circuit and interacts with a magnetic field created by the magnetic layer 20. As a result, and electrodynamic force is developed, causing a droplet of ink to be emitted from the capillary tube 11-14 onto the information carrier C (Fig. 1).

Electrical signal pulses are applied simultaneously to selected combinations of the electrodes. Since every orifice group IA, IB, IC and ID (Fig. I) contains four respective capillaries 11, 12, 13 and 14 (Fig. 3,4) for the four inks: black, yellow, red and blue, depending on the presence of electricity potential at both electrodes of each ( capillary tube, a quantity of ink fluid (or fluids) is emitted to one, two, three or four points of each zone Ia, Ib, Ic and Id of the information carrier C (Fig. I). Thus, all elements of the image are inked simultaneously with the respective ink fluids throughout the whole of the matrix M covered image space of the information carrier C(Fig.I).

In reality, this operation can be carried out with the help of a matrix memory regulation device that is geometrically similar to the matrix M by having cells, every one of which corresponds to a specific capillary 11-14 of each orifice group IA, IB, IC & ID, The operation can be executed with the help of a microprocessor, computer or other such equipment for applying electric potential to respective electrodes 15 and 16 in order to obtain a previously designed distribution of ink dots tinted on the image elements. Further discussion of the details of these devices, which are widely used in printing trades and computer technology, are omitted, since they are of no direct relevance to the subject matter of the invention.

The exact adjustment of colours, regardless of any external factors, is achieved owing to the fact that the information carrier C and the matrix M (Fig. I) are stationary in relation to each other, and the supply of ink is carried out through immovable tubes 11-14 in the matrix M. Furthermore, the proposed device has a very simple construction, because it has no travelling parts and complex electric-and-mechanical systems for adjustment of colours.

The structure of the device is quite simple and does not require a complex electronic system to maintain movement of the print head components. Its manufacture is also easy, since it includes known elements of traditional technology of print assembly and other uncomplicated techniques requiring no sophisticated machinery.

The proposed jet print head can be efficiently used in order substantially to raise the quality of multicolour printing, whilst simplifying and making cheaper the equipment that is used for this purpose.

The invention can be employed in polygraphy for multicolour print production, in the manufacture of printing machinery, and in printers to operate in conjunction with peripherals of electronic industrial and personal computers. Also, the invention can be implemented in telefax receiving devices.

## Claims

1. A method of multicolour jet printing in which:
i) an information carrier (C), on which information is to be printed, is positioned opposite an array (M) of groups (1A, 1B, 1C, 1D) of ink jet orifices (BK, Y, R, B) arranged such that each orifice (BK, Y, R, B) within a group (1A, 1B, 1C, 1D) can deliver ink of a particular colour; and
ii) an image is formed on the information carrier (C) so as to effect colour subtraction in a zone (1a, 1b, 1c, 1d) of the information carrier (c) corresponding to one or more of the said groups (1A, 1B, 1C, 1D) by propelling ink jets through a selected number of the said orifices (BK, Y, R, B) ofthe or each group (1A, 1B, 1C, 1D);
characterised in that
the method relies upon the said groups (1A, 1B, 1C, 1D) being arranged in a grid of parallel rows and columns; the information carrier (C) is held stationary relative to the array (M); and ink is propelled simultaneously through the orifices (BK, Y, R, B) of the or each group (1A, 1B, 1C, 1D) selected for printing, so that the points of all of the image elements on the information carrier (C) are simultaneously tinted with the colours needed, throughout the whole space of the image.

2. A jet print head (1) comprising a multilaminate structure; an underlay (10); parallel rows and columns of orifices (BK, Y, R, B) into which respective capillaries (11, 12, 13, 14) open in a direction perpendicular to a face of the said underlay (10), each capillary (11, 12, 13, 14) being provided with a first electrode (15) that is common to the row in which the capillary is located and extends in a plane substantially parallel to the said face of the underlay and a second electrode (16) of opposite polarity to the first electrode (15) that is located in the same said plane as the first electrode (15) and supplied with electric current by a conductor (17) which is located in a different plane from the said plane and which does not contact the first electrode; and feeder channels (27-30) for supplying ink to the said capillaries (11-14);
characterised in that
the multilaminate structure is provided with a plurality of layers (23-26), stacked in a direction perpendicular to the face of the underlay (10), and corresponding in number to the number of ink colours with which the head (1) is to be used; the orifices (BK, Y, R, B) are arranged in groups (1A, 1B, 1C, 1D), the number of orifices (BK, Y, R, B) in each group (1A, 1B, 1C, 1D) corresponding to the number of ink colours with which the head (1) is to be used; and the capillaries (11-14) for the orifices (BK, Y, R, B) for supplying each respective ink colour extend from a respective common layer (23-26) of the multilaminate structure, via any intermediate layer (23-26) of the multilaminate structure, and are supplied with the appropriate coloured ink via respective ones ofthe said feeder channels (27-30) which are situated in that common layer (23-26) of the multilayered structure.

3. A method of manufacturing a print head (1) according to Claim 2 comprising:
i) forming the first and second electrodes (15,16) on the underlay (10); and
ii) forming the multilaminate structure upon the underlay (10) from a series of dielectric layers (23-26) incorporating the said conductors;
characterised in that
the dielectric layer (26) furthest from the underlay (10) is subsequently removed and the capillaries (11-14) intended to feed from the feeder channels (27-30) provided in that removed layer are bored through the layers still in place, this process being repeated until all of the capillaries (11-14) are bored,whereafter the removed layers (23-26) are subsequently re-assembled in reverse order.

4. A method according to Claim 3, characterised in that the feeder channels (27-30) are formed in the respective layers (23-26) before the capillaries (11-14) are formed, and so as to intersect points in the respective layers where the capillaries (11-14) are intended to pass.

5. A method according to Claim 3, characterised in that, after the capillaries (11-14) are formed, the feeder channels (27-30) are formed so as to intersect the capillaries (11-14) terminating at the respective layer in which they are located.

## Patentansprüche

1. Verfahren für Mehrfarben-Tintenstrahldruck, wobei:
i) ein Informationsträger (C), auf den Informationen zu drucken sind, gegenüber einer Matrix bzw. regelmäßigen Anordnung (M) von Gruppen (1A, 1B, 1C, 1D) von Tintenstrahidüsen (BK, Y, R, B) positioniert wird, die so angeordnet sind, daß jede Düse (BK, Y, R, B) innerhalb einer Gruppe (1A, 1B, 1C, 1D) eine Tinte von bestimmter Farbe abgeben kann; und wobei
ii) ein Bild auf dem Informationsträger (C) so erzeugt wird, daß eine Farbsubtraktion in einer Zone (1a, 1b, 1c, 1d) des Informationsträgers (C) bewirkt wird, die einer oder mehreren Gruppen (1A, 1B, 1C, 1D) entspricht, indem Tintenstrahlen durch eine ausgewählte Anzahl der Düsen (BK, Y, R, B) der bzw. jeder Gruppe (1A, 1B, 1C, 1D) ausgestoßen werden;
dadurch gekennzeichnet, daß:
das Verfahren darauf basiert, daß die Gruppen (1A, 1B, 1C, 1D) in einem Gitter von parallelen Zeilen und Spalten angeordnet sind; der Informationsträger (C) relativ zu der Matrix (M) unbeweglich gehalten wird; und Tinte bzw. Druckfarbe gleichzeitig durch die Düsen (BK, Y, R, B) der bzw. jeder für den Druck ausgewählten Gruppe (1A, 1B, 1C, 1D) ausgestoßen wird, so daß die Punkte aller Bildelemente auf dem Informationsträger (C) über die gesamte Bildfläche gleichzeitig mit den benötigten Farben eingefärbt werden.

2. Tintenstrahldruckkopf (1), der aufweist: eine Mehrschichtenstruktur; eine Unterlage (10); parallele Zeilen und Spalten von Düsen (BK, Y, R, B), in welche in einer zur Oberfläche der Unterlage (10) senkrechten Richtung entsprechende Kapillaren (11, 12, 13, 14) einmünden, wobei jede Kapillare (11, 12, 13, 14) mit einer ersten Elektrode (15), die der Zeile, in der sich die Kapillare befindet, gemeinsam ist und sich in einer Ebene erstreckt, die zur Oberfläche der Unterlage im wesentlichen parallel liegt, und mit einer zweiten Elektrode (16) mit zur ersten Elektrode (15) entgegengesetzter Polarität versehen ist, die in der gleichen Ebene liegt wie die erste Elektrode (15), und durch einen Leiter (17) mit elektrischem Strom gespeist wird, der in einer anderen als der genannten Ebene liegt und keinen Kontakt mit der ersten Elektrode hat; und Zulaufkanäle (27-30) zur Zuführung von Tinte zu den Kapillaren (11-14);
dadurch gekennzeichnet, daß:
die Mehrschichtenstruktur mit mehreren Schichten (23-26) versehen ist, die in einer zur Oberfläche der Unterlage (10) senkrechten Richtung übereinandergeschichtet sind und deren Anzahl der Anzahl der Druckfarben entspricht, mit denen der Kopf (1) verwendet werden soll ; daß die Düsen (BK, Y, R, B) in Gruppen (1A, 1B, 1C, 1D) angeordnet sind, wobei die Anzahl der Düsen (BK, Y, R, B) in jeder Gruppe (1A, 1B, 1C, 1D) der Anzahl der Druckfarben entspricht, mit denen der Kopf (1) verwendet werden soll; und daß die Kapillaren (11-14) für die Düsen (BK, Y, R, B) zum Zuführen der jeweiligen Druckfarbe sich von einer jeweils gemeinsamen Schicht (23-26) der Mehrschichtenstruktur durch jede Zwischenschicht (23-26) der Mehrschichtenstruktur erstrecken und über entsprechende Zulaufkanäle (27-30), die in der gemeinsamen Schicht (23-26) der Mehrschichtenstruktur angeordnet sind, mit der entsprechenden Druckfarbe gespeist werden.

3. Verfahren zur Herstellung eines Druckkopfes (1) nach Anspruch 2, mit den Schritten:
i) Ausbilden der ersten und zweiten Elektroden (15, 16) auf der Unterlage (10); und
ii) Ausbilden der Mehrschichtenstruktur auf der Unterlage (10) aus einer Reihe dielektrischer Schichten (23-26), in welche die Leiter eingelagert sind;
dadurch gekennzeichnet, daß:
die am weitesten von der Unterlage (10) entfernte dielektrische Schicht (26) anschließend entfernt und die Kapillaren (11-14), die von den in dieser entfernten Schicht vorgesehenen Zulaufkanälen (27-30) gespeist werden sollen, durch die noch vorhandenen Schichten gebohrt werden, und daß dieses Verfahren wiederholt wird, bis alle Kapillaren (11-14) gebohrt sind, wonach die entfernten Schichten (23-26) anschließend in umgekehrter Reihenfolge wieder aufgebracht werden.

4. Verfahren nach Anspruch 3, dadurch gekennzeichnet, daß die Zulaufkanäle (27-30) vor der Ausbildung der Kapillaren (11-14) in den entsprechenden Schichten (23-26) so ausgebildet werden, daß sie Punkte in den entsprechenden Schichten schneiden, wo die Kapillaren (11-14) hindurchgehen sollen.

5. Verfahren nach Anspruch 3, dadurch gekennzeichnet, daß nach der Ausbildung der Kapillaren (11-14) die Zulaufkanäle (27-30) so ausgebildet werden, daß sie die Kapillaren (11-14) schneiden, die in der jeweiligen Schicht enden, in der sie sich befinden.

## Revendications

1. Procédé pour impression par jet d'encre multicolore dans lequel:
i) un support d'information (C), sur lequel il faut imprimer l'information, est placé en regard d'un ensemble (M) de groupes (1A, 1B, 1C, 1D) d'orifices de jet d'encre (BK, Y, R, B) agencés de façon à ce que chaque orifice (BK, Y, R, B) au sein d'un groupe (1A, 1B, 1C, 1D) puisse distribuer de l'encre d'une couleur particulière; et
ii) une image est formée sur le support d'information (C) de sorte à effectuer la soustraction de couleur dans une zone (1a, 1b, 1c, 1d) du support d'information (C) correspondant à un ou plusieurs desdits groupes (1A, 1B, 1C, 1D) en propulsant des jets d'encre au travers d'un nombre choisi desdits orifices (BK, Y, R, B) du ou de chaque groupe (1A, 1B, 1C, 1D);
caractérisé en ce que:
le procédé repose sur le fait que lesdits groupes (1A, 1B, 1C, 1D) sont agencés en une grille de rangées et de colonnes parallèles; le support d'informations (C) est maintenu stationnaire par rapport à l'ensemble (M); et de l'encre est propulsée simultanément au travers des orifices (BK, Y, R, B) du ou de chaque groupe (1A, 1B, 1C, 1D) choisis pour l'impression de sorte que les points de la totalité des éléments de l'image sur le support d'information (C) sont simultanément teintés avec les couleurs nécessaires, à travers l'espace entier de l'image.

2. Tête d'impression par jet d'encre (1) comprenant une structure multilaminée; un substrat sous-jacent (10); des rangées et des colonnes d'orifices parallèles (BK, Y, R, B) dans lesquels les capillaires correspondants (11, 12, 13, 14) s'ouvrent suivant une direction perpendiculaire à une face dudit substrat sous-jacent (10); chaque capillaire (11, 12, 13, 14) étant muni d'une première électrode (15) qui est commune à la rangée dans laquelle le capillaire est situé et s'étend dans un plan essentiellement parallèle à ladite face du substrat sous-jacent et une seconde électrode (16) de polarité opposée à celle de la première électrode (15) qui est située dans le même plan que la première électrode (15) et alimentée en courant électrique par un conducteur (17) qui est situé dans un plan différent dudit plan et qui ne touche pas la première électrode; et des canaux d'alimentation (27-30) pour fournir de l'encre aux dits capillaires (11-14);
caractérisée en ce que:
la structure multilaminée est munie d'une pluralité de couches (23-26), empilées suivant une direction perpendiculaire à la face du substrat sous-jacent (10), et correspondant en nombre au nombre de couleurs d'encre avec lequel la tête (1) doit être utilisée; les orifices (BK, Y, R, B) sont agencés en groupes (1A, 1B, 1C, 1D), le nombre d'orifices (BK, Y, R, B) dans chaque groupe (1A, 1B, 1C, 1D) correspondant au nombre de couleurs d'encre avec lequel la tête (I) doit être utilisée; et les capillaires (11-14) pour les orifices (BK, Y, R, B) pour fournir chaque couleur d'encre correspondante s'étendent d'une couche commune correspondante (23-26) de la structure multilaminée, par l'intermédiaire d'une quelconque couche intermédiaire (23-26) de la structure multilaminée, et sont alimentés avec de l'encre colorée appropriée par l'intermédiaire de l'un des canaux d'alimentation correspondant (27-30) qui sont situés dans cette couche commune (23-26) de la structure multi-couches.

3. Procédé de fabrication d'une tête d'impression (1) selon la revendication 2 comprenant:
i) la formation de la première et de la deuxième électrode (15, 16) sur le substrat sous-jacent (10); et
ii) la formation de la structure multilaminée sur le substrat sous-jacent (10) à partir d'une série de couches diélectriques (23-26) incorporant lesdits conducteurs;
caractérisé en ce que:
la couche diélectrique (26) la plus éloignée du substrat sous-jacent (10) est enlevée par la suite et que les capillaires (11-14) prévus pour alimenter à partir des canaux d'alimentation (27-30) prévus dans cette couche enlevée sont percés à travers les couches toujours en place, ce procédé étant répété jusqu'à ce que tous les capillaires (11-14) soient percés, après quoi les couches enlevées (23-26) sont ré-assemblées par la suite dans l'ordre inverse.

4. Procédé selon la revendication 3, caractérisé en ce que les canaux d'alimentation (27-30) sont formés dans les couches correspondantes (23-26) avant que les capillaires (11-14) ne soient formés, et de façon à entrecouper des points dans les couches correspondantes où il est prévu que les capillaires (11-14) passent.

5. Procédé selon la revendication 3, caractérisé en ce que, après que les capillaires (11-14) aient été formés, les canaux d'alimentation (27-30) sont formés de façon à entrecouper les capillaires (11-14) qui se terminent dans les couches correspondantes dans lesquelles ils sont situés.
